# EUROPÄISCHE PATENTSCHRIFT

(11) **EP 2 978 976 B1**
(45) Veröffentlichungstag und Bekanntmachung des Hinweises auf die Patenterteilung: **10.10.2018**
(21) Anmeldenummer: 14705476.1
(22) Anmeldetag: 12.02.2014
(51) Int. Cl.: F04D 29/32, F16H 57/04

(54) **GETRIEBE MIT EINER WELLE**
GEARBOX WITH A SHAFT
TRANSMISSION COMPRENANT UN ARBRE

(30) Priorität: 28.03.2013 DE 102013005430
(43) Veröffentlichungstag der Anmeldung: 03.02.2016
(73) Patentinhaber: Sew-Eurodrive GmbH & Co. KG, 76646 Bruchsal (DE)
(72) Erfinder: VÖLKER, Konstantin, 76646 Bruchsal (DE); BARTON, Peter, 75015 Bretten (DE); DIETRICH, Stefan, 76149 Karlsruhe (DE); BUNKA, Anette, 76344 Eggenstein-Leopoldshafen (DE)
(86) Internationale Anmeldenummer: PCT/EP2014/000382
(87) Internationale Veröffentlichungsnummer: WO 2014/154316

(56) Entgegenhaltungen:
- EP-A2- 2 020 536
- WO-A1-2010/108598
- WO-A1-2014/005666
- DE-A1-102005 031 197
- JP-A- H1 061 754

## Beschreibung

Die Erfindung betrifft ein Getriebe mit einer Welle.

Aus der DE 10 2007 009 366 A1 ist ein Lüfterrad mit Düseneffekt bekannt.

Aus der DE 10 2005 031 197 A1 ist ein Lüfter bekannt, bei dem die Anströmung auf eine um 30° geneigte Fläche verlegt ist.

**Aus der** DE 10 2007 008 658 A1 **als nächstliegender Stand der Technik ist ein Getriebe bekannt, wobei auf einer Welle ein Lüfterrad drehfest mit der Welle verbunden ist, wobei die Lüfterhaube eine Seitenwand mit einer Öffnung aufweist zum Lufteinlass.**

**Aus der** GB 2 282 206 A **ist ein Getriebegehäuse bekannt, wobei ein Lüfterrad mit einer Welle verbunden ist und eine Lüfterhaube ein sich radial nach innen erstreckendes Blechteil aufweist, das eine Öffnung aufweist.**

**Aus der** JP 8 105 521 A **ist wiederum bekannt, ein Lüfterrad mit einer Welle drehfest zu verbinden, wobei die Lüfterhaube eine Seitenwand aufweist, die sich radial nach innen erstreckt und eine Öffnung aufweist.**

**Aus der** JP 10 061 754 A **ist als nächstliegender Stand der Technik ebenfalls ein luftgekühltes Getriebe bekannt.**

**Aus der** US 5 755 555 A **ist ein Lüfterrad bekannt.**

**Aus der** JP H10 61754 A **ist ein Lüfter-gekühltes Getriebe bekannt.**

**Aus der** WO 2014/005666 A1 **ist ein Getriebe mit einer Welle und darauf angebrachtem Lüfter in einer Lüfterhaube bekannt.**

**Aus der** WO 2010/108598 A1 **ist ein Getriebe mit Lüfter bekannt.**

**Aus der** EP 2 020 536 A2 **ist eine Kühlstruktur für eine Transmissionsanordnung bekannt.**

Der Erfindung liegt daher die Aufgabe zugrunde, ein Getriebe mit einer Welle in möglichst kompakter Weise weiterzubilden, also möglichst viel Leistung bei möglichst geringem Volumen zu ermöglichen.

Erfindungsgemäß wird die Aufgabe bei dem Getriebe mit einer Welle nach den in Anspruch 1 angegebenen Merkmalen gelöst.

Wichtige Merkmale der Erfindung bei dem Getriebe mit einer Welle, insbesondere eintreibende Welle, sind, dass ein Lüfterrad drehfest mit der Welle verbunden ist,
wobei am Getriebegehäuse eine Lüfterhaube verbunden ist, die das Lüfterrad zumindest teilweise umgibt,
**wobei** mit der Lüfterhaube ein Trennblech zur Trennung des Druckraums des Lüfters vom Saugraum des Lüfters verbunden ist,
wobei das Trennblech eine Lufteintrittsöffnung für das Lüfterrad aufweist und auf der vom Getriebe axial abgewandten Seite des Lüfterrades angeordnet ist.

Von Vorteil ist dabei, dass der Druckraum vom Saugraum getrennt ist durch ein einfaches dünnes und kostengünstiges Metallblech, insbesondere Stahlblech. Somit ist ein besonders effektives Kühlen des Getriebes ermöglicht, da eine Rückverwirbelung oder Rückführung des vom Lüfter geförderten Luftstroms verhindert ist.

Der Lüfter weist ein Lüfterrad auf, das eine erste und eine zweite Deckscheibe aufweist, die axial voneinander beabstandet sind, wobei Lüfterflügel des Lüfterrads zwischen den Deckscheiben angeordnet sind,
wobei das Trennblech eine Lufteintrittsöffnung für das Lüfterrad aufweist und auf der vom Getriebe axial abgewandten Seite einer Deckscheibe des Lüfterrades angeordnet ist.
Von Vorteil ist dabei, dass die Luft in Kanälen des Lüfterrades geführt ist, wobei die Kanäle durch die Lüfterflügel und die Deckscheiben gebildet sind. Außerdem ist der Lufteintritt durch die mittig angeordnete Öffnung im Trennblech derart ausführbar, dass die Luft direkt in die Kanäle des Lüfterrads zugeführt wird und möglichst geringe Verwirbelungen und Wirbelverluste im Zutrittsbereich entstehen. Die Öffnung in der Trennscheibe entspricht dabei im Wesentlichen dem dem Trennblech zugewandten Öffnungsdurchmesser des Lufteintritts des Lüfterrads.

Das Lüfterrad ist ein Radiallüfterrad, insbesondere wobei die Lüfterflügel des Lüfterrads in Umfangsrichtung unregelmäßig voneinander beabstandet sind. Von Vorteil ist dabei, dass ein energieeffizient arbeitendes Lüfterrad einsetzbar ist, das eine nur geringe Geräuschentwicklung aufweist.
Bei einer vorteilhaften Ausgestaltung ist das Trennblech lösbar verbunden mit der Lüfterhaube. Von Vorteil ist dabei, dass durch Austausch des Trennblechs wahlweise unterschiedlich große Lüfterräder in der Lüfterhaube vorsehbar sind.

Das grenzt ans Lüfterrad an, wobei eine Beabstandung vorgesehen ist, die eine Berührung von Trennblech und Lüfterrad verhindert, aber keine wesentliche Rückströmung vom Druckraum in den Saugraum ermöglicht. Von Vorteil ist dabei, dass keine Reibverluste auftreten und dennoch keine Rückführung des geförderten Luftstroms auftritt.

Bei einer vorteilhaften Ausgestaltung ist die Lüfterhaube und/oder das Getriebegehäuse rechteckförmig
und/oder
der Außendurchmesser des Lüfterrads ist größer als die Breite des Getriebegehäuses und/oder ist kleiner als die Höhe des Getriebegehäuses. Von Vorteil ist dabei, dass der geförderte Luftstrom entlang des Getriebegehäuses führbar ist.

Bei einer vorteilhaften Ausgestaltung sind Luftleitbleche zur Verhinderung oder Verminderung von Drall des aus der Lüfterhaube ausströmenden Luftstroms zwischen Lüfterhaube und Getriebegehäuse angeordnet,
wobei die Luftleitbleche axial beabstandet sind vom Lüfterrad, insbesondere mit dem Abstand h1. Von Vorteil ist dabei, dass ein möglichst unverwirbelter Luftstrom aus dem Lüfter oder zumindest aus der den Lüfter umgebenden Lüfterhaube austritt.

Bei einer vorteilhaften Ausgestaltung ist die Lüfterhaube im Luftaustrittsbereich als Düse ausgeformt, so dass ein austretender Luftstrom entlang dem Getriebegehäuse strömt. Von Vorteil ist dabei, dass die Austrittsgeschwindigkeit erhöhbar ist.

Bei einer vorteilhaften Ausgestaltung ist ein Deckblech axial vom Trennblech beabstandet, so dass der Luftzutritt aus radialer Richtung erfolgt,
insbesondere wobei das Deckblech Ausnehmungen aufweist zur Ermöglichung von zusätzlich axial eintretendem Luftstrom. Von Vorteil ist dabei, dass aus allen Umfangswinkeln Luft im Wesentlichen gleichmäßig eintritt.

Bei einer vorteilhaften Ausgestaltung ist die Lüfterhaube, insbesondere mit Trennblech, als Stanz-Biegeteil ausgeführt,
insbesondere wobei die Düse durch Anstellung einer Lüfterhaubenkante im Luftaustrittsbereich ausgeführt ist,

insbesondere wobei der Anstellwinkel zwischen 10° und 40° ist. Von Vorteil ist dabei, dass die Herstellung der Düse in einfacher Weise, insbesondere durch Biegen ausführbar ist. Der angegebene Winkelbereich ermöglicht eine energieeffiziente Geschwindigkeitserhöhung. Bei einer vorteilhaften Ausgestaltung ist der Außenradius des Lüfterrads größer als die Breite des Getriebes und ist kleiner als die Höhe des Getriebes. Von Vorteil ist dabei, dass der austretende Luftstrom entlang der Seiten des Getriebes austritt.
Bei anderen erfindungsgemäßen Ausführungsbeispielen wird wahlweise ein Lüfterrad eingebaut, dessen Außenradius des Lüfterrads kleiner als die Breite des Getriebes und kleiner als die Höhe des Getriebes. Dabei ist dann wiederum der Radius der Öffnung des Trennblechs entsprechend klein ausgeführt, also mit dem Außenradius des durch die Kanäle des Lüfterrades gebildeten Lufteintrittsbereichs des Lüfterrades.
Bei einer vorteilhaften Ausgestaltung erstrecken sich die Luftleitbleche radial vom Getriebegehäuse zur Lüfterhaube. Von Vorteil ist dabei, dass eine einfache Antidrallwirkung erzielbar ist. Außerdem sind die Luftleitbleche jeweils eben ausformbar und sehr dünnwandig, so dass eine im Wesentlichen rein radiale Erstreckung ausreicht.

das Lüfterrad weist eine erste und eine zweite Deckscheibe auf, die axial voneinander beabstandet sind, wobei Lüfterflügel zwischen den Deckscheiben angeordnet sind, so dass Kanäle gebildet sind,
wobei der Kanalquerschnitt vom radial weiter innen liegenden Eintrittsbereich am Lüfterrad zum radial weiter außen liegenden Austrittsbereich am Lüfterrad monoton zunimmt, insbesondere wobei der Eintrittsbereich an einer axialen Position erfolgt, insbesondere also die Eintrittsbereichsfläche eine sich nur radial und in Umfangsrichtung erstreckende Fläche und die Austrittsbereichsfläche ein sich in radialer Richtung, in Umfangsrichtung und in axialer Richtung erstreckende Fläche ist. Von Vorteil ist dabei, dass ein Diffusoreffekt ausführbar ist und trotzdem der Lüfter eine Förderwirkung bewirkt. Somit wird die Luft einerseits nach radial außen befördert und andererseits ein hoher Druck aufgebaut. Somit ist bei Luftaustritt aus der Lüfterhaube eine hohe Austrittsgeschwindigkeit erreichbar mittels der Düse, die den vom Lüfter aufgebauten Druck umwandelt in eine hohe Austrittsgeschwindigkeit. Außerdem weist der nach radial außen geförderte Luftstrom eine axiale Komponente auf, da die Austrittsbereichsfläche sich in allen drei Richtungen erstreckt. Die Austrittsbereichsfläche des Lüfterrads vereinfacht also ein Umlenken des radial geförderten Luftstroms in die axiale Richtung, wobei die Lüfterhaube zur vollständigen Umlenkung in axiale Richtung zusätzlich wirksam ist.

Bei der Erfindung ist zumindest eine der Deckscheiben konisch geformt. Von Vorteil ist dabei, dass eine schwache Diffusorwirkung, also die entsprechend schwache Zunahme des Kanalquerschnitts nach radial außen in einfacher Weise erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Getriebe mit angebautem Lüfter 5 schematisch in angeschnittener Draufsicht gezeigt.
In der Figur 2 ist ein Ausschnitt aus Figur 1 um den Lüfter 5 herum gezeigt.
In der Figur 3 ist eine Ansicht in axialer Richtung gezeigt.
In der Figur 4 ist beim Querschnitt nach Figur 1 die Lüfterhaube entfernt.

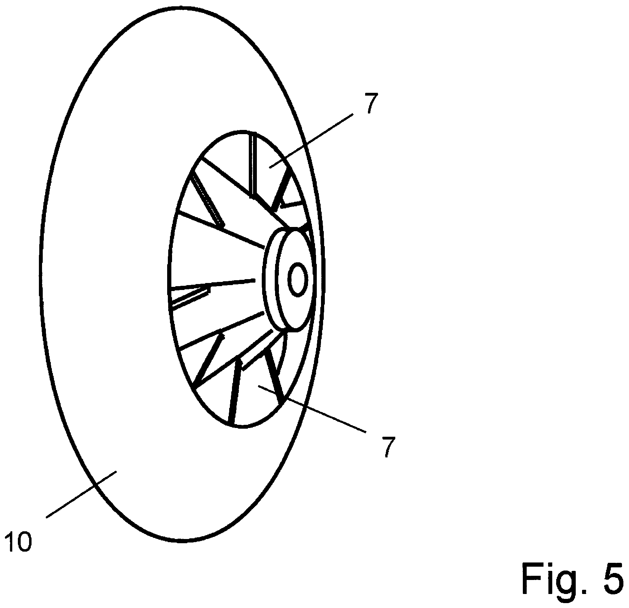

In der Figur 5 ist eine Schrägansicht aus einer ersten Blickrichtung auf den Lüfter 5 gezeigt.
In der Figur 6 ist eine Schrägansicht aus einer anderen Blickrichtung auf den Lüfter 5 gezeigt.
**In der** **Figur 7** **läuft im Unterschied zur** **Figur 2** **das Trennblech 1 auf das Deckblech radial und axial ungefähr mittig zu.**

Wie in den Figuren dargestellt, ist ein Lüfter 5 auf der eintreibenden Welle 8 des Getriebes 6 drehfest verbunden. An dem Getriebegehäuse ist eine Lüfterhaube 9 angeordnet, die den Lüfter 5 umgibt.

Das Getriebe ist als Kegelradgetriebe ausgeführt, weshalb die eintreibende Welle 8 in einem Kegeltopfgehäuseteil 11 gelagert ist, das mit dem Gehäuse des Getriebes 6 verbunden ist.

Der Lüfter 5 umfasst ein Radiallüfterrad, dessen Lüfterflügel 7 sich radial, insbesondere nur radial erstrecken. Somit ist eine drehrichtungsunabhängige Luftförderung ermöglicht.

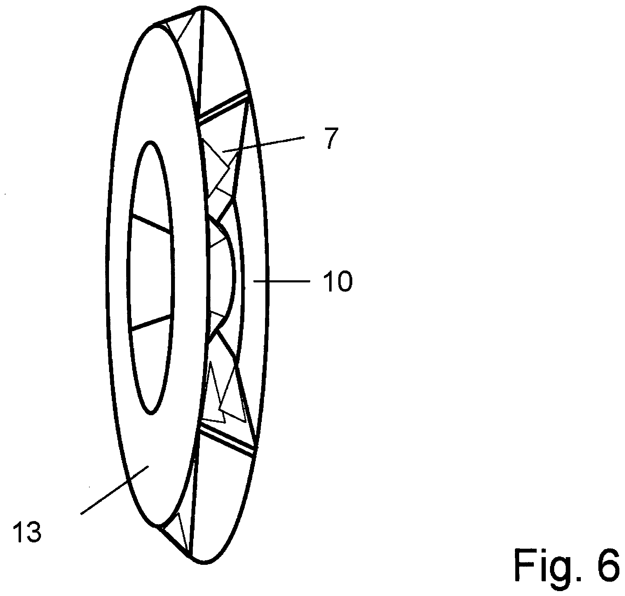

Wie in Figur 6 dargestellt, weist das Radiallüfterrad eine erste Deckscheibe 10 und eine zweite Deckscheibe 13 auf, zwischen denen die Lüfterflügel 7 angeordnet sind. Die erste Deckscheibe 10 und die zweite Deckscheibe 13 sind also axial voneinander beabstandet. Die Lüfterflügel 7 überdecken den axialen Zwischenbereich zwischen der ersten und zweiten Deckscheibe 10, 13.

Die Lüfterhaube 9 weist ein Trennblech 1 auf, das sich radial erstreckt und an einer axialen Position angeordnet ist, die auf der vom Getriebe mit Kegeltopfgehäuseteil 11 axial abgewandten Seite angeordnet ist. Das Trennblech 1 weist eine mittig angeordnete Öffnung auf, so dass die Luft aus axialer Richtung eingelassen wird. Allerdings ist die Öffnung im Trennblech 1 derart klein ausgeführt, dass die eingelassene Luft nicht auf den äußeren Rand des Lüfterrads trifft. Hierzu ist der Innendurchmesser der Öffnung der Trennscheibe 1 kleiner als der maximale Außendurchmesser des Lüfters 5.

Durch die Anordnung des Lüfters 5 auf der eintreibenden Welle des als Untersetzungsgetriebe ausgeführten Getriebes ist der Lüfter 5 auf der am schnellsten drehenden Welle, nämlich auf der eintreibenden Welle 8, angeordnet.

Die Lüfterhaube 9 lenkt den vom Lüfter 5 geförderten Luftstrom aus der radialen in die axiale Richtung um. Mittels Verengungen erzeugenden Mitteln ist im axialen Austrittsbereich eine Düse 3 und somit eine erhöhte Austrittsgeschwindigkeit erreicht.

Die Austrittsöffnungen der Lüfterhaube 9 sind an ihrer vom Eintrieb abgewandten Seite derart angeordnet, dass der austretende Luftstrom entlang des Getriebegehäuses strömt.

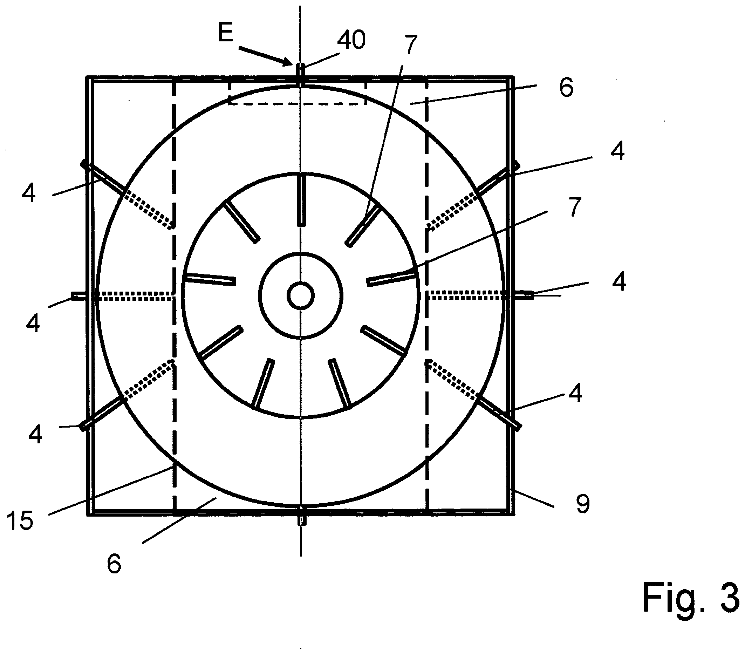

Allerdings ist das Getriebe, wie in der Draufsicht aus Figur 3 ersichtlich, im Wesentlichen quaderförmig ausgeführt, so dass die Frontseite eine im Wesentlichen rechteckförmige Kontur aufweist. Die Lüfterhaube 9 hat ebenfalls eine rechteckige Form, die vorzugsweise im Wesentlichen quadratisch ist und insbesondere eine größere Querschnittsfläche aufweist als der Lüfter 5 und das Getriebegehäuse, insbesondere in Draufsicht gemäß Figur 3.

Dabei ist in Figur 3 das Getriebegehäuse gestrichelt angedeutet.

Der maximale Außendurchmesser des Lüfters 5 ist größer als die Breite des Getriebegehäuses aber kleiner als die Höhe des Getriebegehäuses. Ebenso ist die Lüfterhaube breiter als die Breite des Getriebegehäuses. Die Austrittsöffnung zwischen Lüfter 5 und Getriebegehäuse ist daher groß, insbesondere entspricht sie ungefähr der Differenz zwischen der Breite der Lüfterhaube 9 und der Breite des Getriebegehäuses.

Zur Verhinderung von Drall bei dem vom Lüfter 5 geförderten Luftstrom weist die Lüfterhaube 9 radial ausgerichtete und sich erstreckende Luftleitbleche 4 auf. Somit wird also der Drehimpuls des geförderten Luftstroms reduziert. Dabei erstreckt sich jedes der Luftleitbleche von der Lüfterhaube bis zum Getriebegehäuse. Je nach i Umfangswinkelposition des jeweiligen Luftleitblechs 4 ist die radiale Ausdehnung verschieden. Die Luftleitbleche 4 wirken also als Antidrallbleche für den austretenden Luftstrom.

Der Durchmesser des Lüfters 5 ist kleiner als die Höhe des Getriebegehäuses.

Das erste Deckblech 10 ist konisch geformt, wobei die Konusspitze entfernt ist. Die so vorhandene Öffnung ist als Lufteintritt wirksam und weist einen Durchmesser auf, der kleiner oder gleich ist wie der Durchmesser der durch das Trennblech 1 bereit gestellten Lufteinlass-Öffnung.

Nach Lufteintritt in den in Umfangsrichtung durch die Lüfterflügel 7 begrenzten Förderkanal des Lüfters 5 wächst der Kanalquerschnitt Q2 vom Einströmquerschnitt Q1 an bis er den Ausströmquerschnitt Q3 erreicht. Vorzugsweise ist dabei das Anwachsen, also die Zunahme, des Querschnitts Q2 monoton. Der Lüfter arbeitet also einerseits als Diffusor, andererseits ist aber durch die Ausbildung als Radiallüfter eine Förderwirkung in radialer Richtung vorhanden. Somit wird ein relativ hoher Druck bei relativ kleiner Strömungsgeschwindigkeit vom Radiallüfter erzeugt.

Die zweite Deckscheibe 13 ist vorzugsweise eben ausgeführt, erstreckt sich also in radialer Richtung und in Umfangsrichtung.

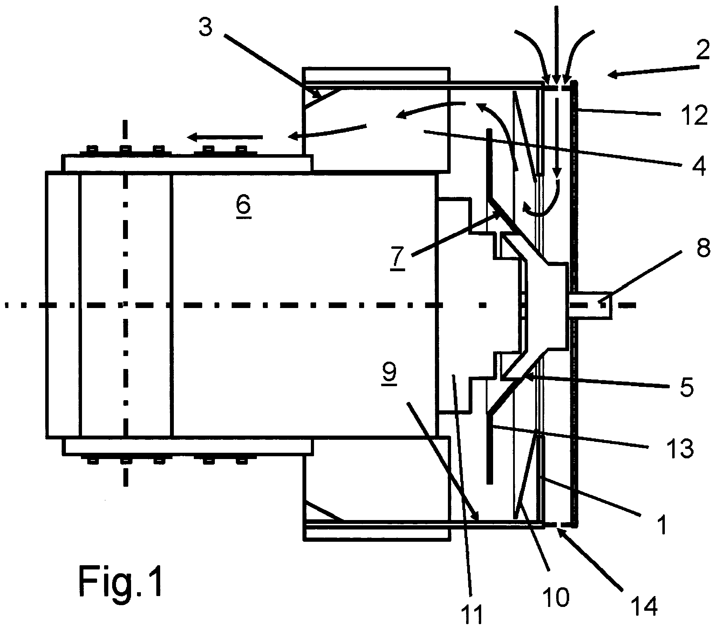

Wie in Figur 1 gezeigt, erfolgt der Luftzutritt in den von der Lüfterhaube 9 umgebenen Bereich aus radialer Richtung, weil die zugehörige Öffnung in radialer Richtung in die Umgebung mündet.

Mittels des Deckblechs 12 wird die eingetretene Luft nach radial weiter innen geführt und strömt dort im Öffnungsbereich des Trennblechs 1 axial in den Lüfter 5 ein. Der vom Lüfter 5 radial herausgeförderte Luftstrom wird von der Lüfterhaube 9 umgelenkt. Der Austritt des Luftstroms erfolgt in axialer Richtung entlang des Getriebegehäuses. Im Austrittsbereich der Lüfterhaube 9 bewirkt die Verengung einen Düseneffekt und somit eine Erhöhung der Strömungsgeschwindigkeit des austretenden Luftstroms.

Durch das Deckblech 12 ist der radial gerichtete Lufteintritt ermöglicht. Somit ist die eintreibende Welle 8 mit einer antreibenden Welle eines das Getriebe antreibenden Elektromotors verbindbar.

Der von der Lüfterhaube 9 überdeckte axiale Bereich umfasst den von den Lüfterflügeln 7 überdeckten axialen Bereich und zumindest teilweise auch den von den Luftleitblechen 4 überdeckten axialen Bereich.

Lüfterhaube 12 und Trennblech 1 sind einstückig fertigbar, insbesondere aus einem Metallblech, insbesondere Stahlblech. Eine besonders einfache und kostengünstige Herstellung ist erreichbar durch die Fertigung als Stanz-Biegeteil. Auch eine zweistückige Ausführung ist vorteilhaft, insbesondere bei kleinen Stückzahlen.

**Wie in** **Figur 3** **gezeigt, weist die Lüfterhaube einen rechteckförmigen Querschnitt auf. Dabei ist die Normale der Querschnittsfläche parallel zur Achse der eintreibenden Welle ausgerichtet.**

Zur Reduzierung von Wirbelverlusten sind die Luftleitbleche 4 axial beabstandet von dem Lüfter 5.

Die Lüfterflügel 7 sind in Umfangsrichtung nicht gleichmäßig voneinander beabstandet, so dass Verluste, insbesondere Körperschall- und Luftschallverluste, reduzierbar sind. Vorzugsweise sind neun Lüfterflügel 7 vorhanden.

Die Nabe des Lüfterrades ist konisch ausgeführt, wobei der Umfang der Nabe in Strömungsrichtung zur Umleitung der Luft in radiale Richtung zunimmt.

Wie in Figur 3 gezeigt, sind in Umfangsrichtung sechs radial lang sich erstreckende Luftleitbleche 4 vorhanden und zwei weitere, radial sich kurz erstreckende Luftleitbleche 40, die im oberen und im unteren Bereich der Lüfterhaube 9 angeordnet sind.

Die Druckseite und die Saugseite sind somit getrennt durch das Trennblech 1. Dabei ist die im Trennblech 1 angeordnete Öffnung für den Lufteintritt kreisförmig ausgeschnitten, wobei der Mittelpunkt des Kreises auf der gedachten Achse der eintreibenden Welle liegt.

Die Düse 3 ist durch Anstellung der Hinterkante der Lüfterhaube 9 einfach herstellbar. Die Anstellung weist einen Winkel zwischen 10° und 40° auf.

Das Deckblech 12 leitet die Luft von radial außen nach radial weiter innen. Somit ist an dem vom Lüfter 5 abgewandten axialen Endbereich der eintreibenden Welle ein beliebiger Anbau vorsehbar. Denn diese axial sich vom Deckblech und dem Getriebe weiter weg erstreckenden Anbauten haben keinen wesentlichen Einfluss auf die Luftströmung. Denn das Deckblech 12 ermöglicht den Zustrom der kühlen Umgebungsluft aus radialer Richtung. Selbst wenn also die Anbauten eine heiße Oberfläche aufweisen, transportiert kein Luftstrom Wärme von den Anbauten in den Lüfter. Insbesondere ist also eine Kupplung zwischen dem antreibenden Elektromotor und dem Getriebe, insbesondere der eintreibenden Welle des Getriebes, anordenbar. Gerade bei einer an der eintreibenden Welle 8 angeordneten Fluidkupplung, also hydraulisch arbeitenden Kupplung, welche eine große Ausdehnung in radialer Richtung aufweist, wird trotzdem durch das Deckblech 12 der Zutritt kühler Luft zum Lüfter 5 bewirkbar.

Das Deckblech 12 ist über ein Eingreifschutzgehäuseteil 14 mit der Lüfterhaube 9 verbunden. Das Eingreifschutzgehäuseteil 14 weist Ausnehmungen auf, die derart klein sind, dass kein menschlicher Finger eines Erwachsenen hindurchpasst, aber groß genug sind, um den Luftstrom mit möglichst geringem Widerstand einzulassen

Außerdem ermöglicht das Deckblech 12 ein Anströmen der Luft aus allen Umfangswinkelpositionen. Dabei ist eine gleichmäßige Verteilung erreicht.

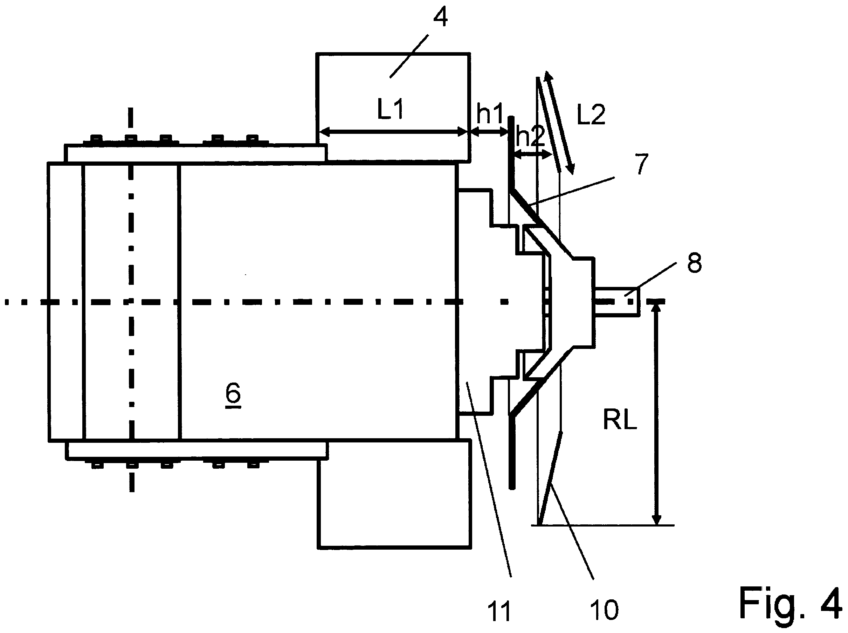

Der Ausströmquerschnitt Q3 ist vorzugsweise zwischen 1,1 mal und 1,3 mal größer als der Einströmquerschnitt Q1. Die in Figur 4 gezeigte Schaufelkanallänge L2 beträgt zwischen dem 0,3 fachen und 0,5 fachen des Lüfterradius RL. Der jeweilige Schaufelkanal ist zumindest in Umfangsrichtung durch die beiden jeweils nächstbenachbarten Lüfterflügel 7 begrenzt und in axialer Richtung einerseits durch die erste Deckscheibe 10 und andererseits durch die zweite Deckscheibe 13.

Vorzugsweise grenzt das Trennblech ans Lüfterrad an, wobei eine Beabstandung, also ein Spalt, vorgesehen ist, wobei die Spaltbreite des Spalts, insbesondere also der vom Spalt überdeckte Radialabstandsbereich, kleiner als 10%, insbesondere kleiner als 5%, insbesondere kleiner als 5% und größer als 0,1%, des Außendurchmessers des Lüfterrads ist.

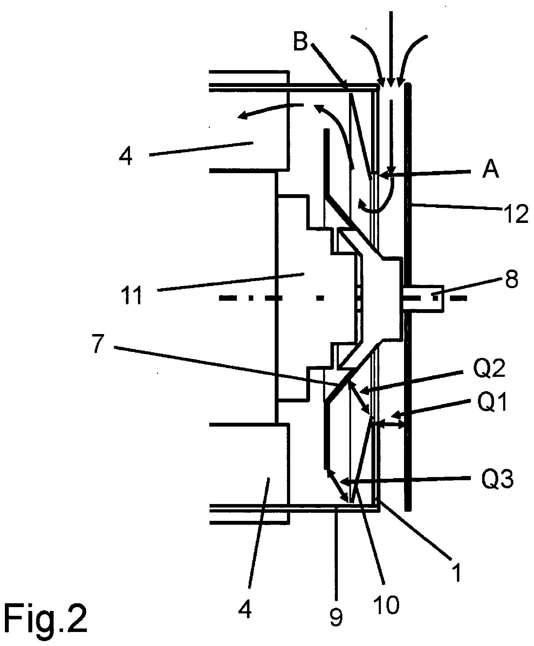

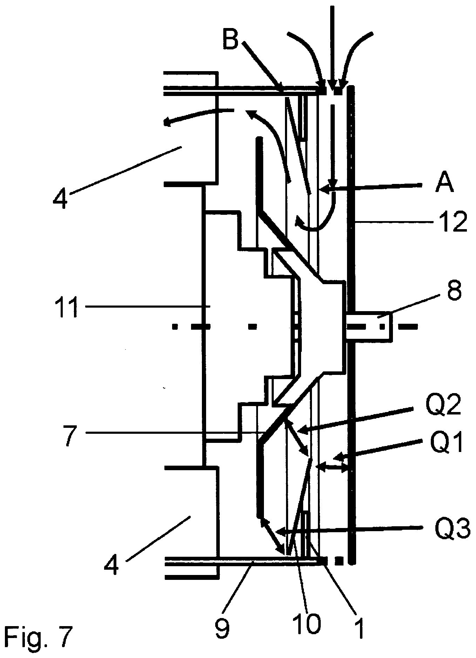

**Wie bei dem weiteren Ausführungsbeispiel nach** **Figur 7** **gezeigt, ist der Lüfter 5 anders ausgeführt als bei** **Figur 2****. Denn die erste Deckscheibe 10 ist weiter nach radial innen erstreckt und der Lüfter 5 dann weiter axial durch die Ausnehmung des Trennblechs 1 hindurchragend. Somit überdeckt der vom Lüfter 5 überdeckte axiale Beriech auch den axialen Bereich des Trennblechs 1.**

**Insbesondere ist der kleinste Radialabstand des Trennblechs 1 innerhalb des vom Lüfter 5, insbesondere von dessen erster Deckscheibe 10, überdeckten Radialabstandsberiech angeordnet.**

**Darüber hinaus ist die axiale Position des Trennblechs 1 oder der vom Trennblech 1 überdeckte axiale Bereich innerhalb des vom Lüfter 5, insbesondere von dessen erster Deckscheibe 10, überdeckten axialen Bereichs angeordnet.**

**Vorzugsweise ist dabei die Kante des Trennblechs 1, welche die durch das Trennblech 1 bereit gestellte Lufteinlass-Öffnung umrandet, mittig in dem von der ersten Deckscheibe 10 überdeckten axialen Beriech und mittig in dem von der ersten Deckscheibe 10 überdeckten Radialabstandsbereich angeordnet.**

Bei weiteren erfindungsgemäßen Ausführungsbeispielen weist das Deckblech 12 Ausnehmungen auf, so dass zusätzlich auch ein axialer Lufteintritt ermöglicht ist.

Bei weiteren erfindungsgemäßen Ausführungsbeispielen liegt das Trennblech 1 im Unterschied zur Figur 2 nicht am Innenradius des Lüfters 5 an sondern am Außenradius, wobei in beiden Fällen eine kleine Beabstandung in radialer Richtung zwischen dem Trennblech 1 und dem Lüfter 5 zur Vermeidung von Berührung besteht. Die Beabstandung ist aber unter Berücksichtigung der Fertigungstoleranzen möglichst klein gewählt, so dass die Verluste durch Verwirbelung der Strömung, insbesondere rückwirkende Wirbelströme, gering bleiben.

Bei weiteren erfindungsgemäßen Ausführungsbeispielen ist das Trennblech 1 nicht einstückig mit der restlichen Lüfterhaube ausgeführt, so dass ein einfaches Auswechseln ermöglicht ist.

### Bezugszeichenliste

1 Trennblech
2 Luftzuführbereich
3 Düse
4 Luftleitblech
5 Lüfter
6 Getriebe
7 Lüfterflügel
8 Eintriebswelle
9 Lüfterhaube
10 erste Deckscheibe
11 Kegeltopfgehäuse
12 Deckblech
13 zweite Deckscheibe
14 Eingreifschutzgehäuseteil
15 Getriebegehäusekante
40 Luftleitblech

A Öffnungsquerschnitt
Q1 Einströmquerschnitt
Q2 Kanalquerschnitt
Q3 Ausströmquerschnitt

## Patentansprüche

1. Getriebe (6) mit einer Welle, insbesondere eintreibende Welle,
wobei ein Lüfterrad drehfest mit der Welle verbunden ist,
wobei mit dem Getriebegehäuse eine Lüfterhaube (9) verbunden ist, die das Lüfterrad zumindest teilweise umgibt,
**wobei** mit der Lüfterhaube (9) ein Trennblech (1) zur Trennung des Druckraums des Lüfters vom Saugraum des Lüfters verbunden ist,
wobei das Trennblech (1) eine Lufteintrittsöffnung für das Lüfterrad aufweist und auf der vom Getriebe (6) axial abgewandten Seite des Lüfterrades angeordnet ist,
**wobei** das Lüfterrad eine erste und eine zweite Deckscheibe (10, 13) aufweist, die axial voneinander beabstandet sind und Lüfterflügel (7) zwischen den Deckscheiben (10, 13) angeordnet sind, so dass Kanäle gebildet sind, wobei **der Radialabstand der Lufteintrittsöffnung innerhalb, insbesondere mittig innerhalb, des von der ersten Deckscheibe (10) überdeckten Radialabstandsbereich angeordnet ist und**
**wobei die Lufteintrifttsöffnung axial innerhalb, insbesondere mittig innerhalb, des von der erster Deckscheibe (10) überdeckten axialen Bereichs angeordnet ist,**
**wobei** das Trennblech (1) ans Lüfterrad angrenzt, wobei eine Beabstandung vorgesehen ist, die eine Berührung von Trennblech (1) und Lüfterrad verhindert, **dadurch gekennzeichnet, dass zumindest eine der Deckscheiben (10, 13) konisch geformt ist und das Lüfterrad ein Radiallüfterrad mit Diffusoreffekt.**

2. Getriebe (6) nach Anspruch 1,
**dadurch gekennzeichnet, dass**
die Lüfterflügel (7) des Lüfterrads in Umfangsrichtung unregelmäßig voneinander beabstandet sind.

3. Getriebe (6) nach mindestens einem der vorangegangenen Ansprüche,
**dadurch gekennzeichnet, dass**
das Trennblech (1) ans Lüfterrad angrenzt, wobei eine Beabstandung, also ein Spalt, vorgesehen ist, wobei die Spaltbreite des Spalts, insbesondere also der vom Spalt überdeckte Radialabstandsbereich, kleiner als 10%, insbesondere kleiner als 5%, insbesondere kleiner als 5% und größer als 0,1%, des Außendurchmessers des Lüfterrads ist.

4. Getriebe (6) nach mindestens einem der vorangegangenen Ansprüche,
**dadurch gekennzeichnet, dass**
die Lüfterhaube (9) und/oder das Getriebegehäuse rechteckförmig ist

5. Getriebe (6) nach mindestens einem der vorangegangenen Ansprüche,
**dadurch gekennzeichnet, dass**
der Außendurchmesser des Lüfterrads größer ist als die Breite des Getriebegehäuses oder kleiner ist als die Höhe des Getriebegehäuses.

6. Getriebe (6) nach mindestens einem der vorangegangenen Ansprüche,
**dadurch gekennzeichnet, dass**
Luftleitblech (4, 40) zur Verhinderung oder Verminderung von Drall des aus der Lüfterhaube (9) ausströmenden Luftstroms zwischen Lüfterhaube (9) und Getriebegehäuse angeordnet sind,
wobei die Luftleitbleche (4, 40) axial beabstandet sind vom Lüfterrad.

7. Getriebe (6) nach mindestens einem der vorangegangenen Ansprüche,
**dadurch gekennzeichnet, dass**
**die Lüfterhaube (9) im Luftaustrittsbereich als Düse (3) ausgeformt ist, so dass ein austretender Luftstrom entlang dem Getriebegehäuse strömt.**

8. Getriebe (6) nach mindestens einem der vorangegangenen Ansprüche,
**dadurch gekennzeichnet, dass**
**ein Deckblech (12) axial vom Trennblech (1) beabstandet ist, so dass der Luftzutritt aus radialer Richtung erfolgt.**

9. Getriebe (6) nach Anspruch 9,
**dadurch gekennzeichnet, dass**
das Deckblech (12) Ausnehmungen aufweist zur Ermöglichung von zusätzlich axial eintretendem Luftstrom.

10. Getriebe (6) nach Anspruch 9 oder 10,
**dadurch gekennzeichnet, dass**
zwischen Deckblech (12) und Trennblech (1) ein Eingreifschutzgehäuseteil angeordnet ist, über welches das Deckblech (12) am Trennblech (1) gehalten ist.

11. Getriebe (6) nach mindestens einem der vorangegangenen Ansprüche,
**dadurch gekennzeichnet, dass**
**das Trennblech (1) lösbar verbunden ist mit der Lüfterhaube (9), insbesondere so dass durch Austausch des Trennblechs wahlweise unterschiedlich große Lüfterräder in der Lüfterhaube (9) vorsehbar sind.**

12. Getriebe (6) nach mindestens einem der vorangegangenen Ansprüche,
**dadurch gekennzeichnet, dass**
ein Deckblech (12) axial vom Trennblech (1) beabstandet ist.

13. Getriebe (6) nach mindestens einem der vorangegangenen Ansprüche,
**dadurch gekennzeichnet, dass**
die Lüfterhaube (9), insbesondere mit Trennblech (1), als Stanz-Biegeteil ausgeführt ist.

14. Getriebe (6) nach Anspruch 7,
**dadurch gekennzeichnet, dass**
die Düse (3) durch Anstellung einer Lüfterhaubenkante im Luftaustrittsbereich ausgeführt ist, insbesondere wobei der Anstellwinkel zwischen 10° und 40° ist.

15. Getriebe (6) nach mindestens einem der vorangegangenen Ansprüche,
**dadurch gekennzeichnet, dass**
der Außenradius des Lüfterrads größer ist als die Breite des Getriebes (6) und kleiner ist als die Höhe des Getriebes (6).

16. Getriebe (6) nach einem der Ansprüche 1 bis 12,
**dadurch gekennzeichnet, dass**
der Außenradius des Lüfterrads kleiner als die Breite des Getriebes (6) und kleiner als die Höhe des Getriebes (6), wobei der Radius der Öffnung des Trennblechs dem Außenradius des durch die Kanäle des Lüfterrades gebildeten Lufteintrittsbereichs des Lüfterrades, insbesondere im Wesentlichen, gleicht.

17. Getriebe (6) nach mindestens einem der vorangegangenen Ansprüche,
**dadurch gekennzeichnet, dass**
die Luftleitblech (4, 40) sich radial erstrecken vom Getriebegehäuse zur Lüfterhaube (9).

18. Getriebe (6) nach mindestens einem der vorangegangenen Ansprüche,
**dadurch gekennzeichnet, dass**
das Lüfterrad eine erste und eine zweite Deckscheibe (10, 13) aufweist, die axial voneinander beabstandet sind und Lüfterflügel (7) zwischen den Deckscheiben (10, 13) angeordnet sind, so dass Kanäle gebildet sind,
wobei der Kanalquerschnitt (Q2) vom radial weiter innen liegenden Eintrittsbereich am Lüfterrad zum radial weiter außen liegenden Austrittsbereich am Lüfterrad monoton zunimmt,
insbesondere wobei der Eintrittsbereich an einer axialen Position erfolgt, insbesondere also die Eintrittsbereichsfläche eine sich nur radial und in Umfangsrichtung erstreckende Fläche und die Austrittsbereichsfläche eine sich in radialer Richtung, in Umfangsrichtung und in axialer Richtung erstreckende Fläche ist.

## Claims

1. A gear unit (6) having a shaft, in particular an input shaft,
wherein a fan impeller is connected to the shaft in a torsion-resistant manner,
wherein a fan cowl (9), which at least partially surrounds the fan impeller, is connected to the gear unit housing,
wherein a separating plate (1) for separating the pressure chamber of the fan from the suction chamber of the fan is connected to the fan cowl (9),
wherein the separating plate (1) has an air entry opening for the fan impeller and is arranged on the side of the fan impeller which is axially remote from the gear unit (6),
wherein the fan impeller has a first and second cover disc (10, 13), which are axially spaced from one another, and fan blades (7) are arranged between the cover discs (10, 13) so that channels are formed,
wherein
the radial clearance of the air entry opening is arranged within, in particular centrally within, the radial clearance region covered by the first cover disc (10) and
wherein the air entry opening is arranged axially within, in particular centrally within, the axial region covered by the first cover disc (10),
wherein the separating plate (1) adjoins the fan impeller,
wherein a clearance is provided which prevents contact between the separating plate (1) and the fan impeller, **characterised in that** at least one of the cover discs (10, 13) is conically formed and the fan impeller is a radial fan impeller with a diffuser effect.

2. The gear unit (6) according to Claim 1,
**characterised in that**
the fan blades (7) of the fan impeller are irregularly spaced from one another in the circumferential direction.

3. The gear unit (6) according to at least one of the preceding claims,
**characterised in that**
the separating plate (1) adjoins the fan impeller, wherein a clearance, i.e. a gap, is provided, wherein the gap width of the gap, i.e. in particular the radial clearance region covered by the gap, is smaller than 10%, in particular smaller than 5%, in particular smaller than 5% and greater than 0.1%, of the external diameter of the fan impeller.

4. The gear unit (6) according to at least one of the preceding claims,
**characterised in that**
the fan cowl (9) and/or the gear unit housing is rectangular.

5. The gear unit (6) according to at least one of the preceding claims,
**characterised in that**
the external diameter of the fan impeller is greater than the width of the gear unit housing or smaller than the height of the gear unit housing.

6. The gear unit (6) according to at least one of the preceding claims,
**characterised in that**
air deflectors (4, 40) for preventing or reducing swirl of the airflow flowing out of the fan cowl (9) are arranged between the fan cowl (9) and the gear unit housing, wherein the air deflectors (4, 40) are axially spaced from the fan impeller.

7. The gear unit (6) according to at least one of the preceding claims,
**characterised in that**
the fan cowl (9) is formed as a nozzle (3) in the air exit region so that an exiting airflow flows along the gear unit housing.

8. The gear unit (6) according to at least one of the preceding claims,
**characterised in that**
a cover plate (12) is axially spaced from the separating plate (1) so that the air supply takes place from a radial direction.

9. The gear unit (6) according to Claim 9,
**characterised in that**
the cover plate (12) has cutouts for enabling an additionally axially entering airflow.

10. The gear unit (6) according to Claim 9 or 10,
**characterised in that**
a protective-guard housing part, via which the cover plate (12) is held on the separating plate (1), is arranged between the cover plate (12) and the separating plate (1).

11. The gear unit (6) according to at least one of the preceding claims,
**characterised in that**
the separating plate (1) is releasably connected to the fan cowl (9), in particular so that, by replacing the separating plate, fan impellers, optionally of different sizes, may be provided in the fan cowl (9).

12. The gear unit (6) according to at least one of the preceding claims,
**characterised in that**
a cover plate (12) is axially spaced from the separating plate (1).

13. The gear unit (6) according to at least one of the preceding claims,
**characterised in that**
the fan cowl (9), in particular with the separating plate (1), is realised as a punched and bent part.

14. The gear unit (6) according to Claim 7,
**characterised in that**
the nozzle (3) is realised by arranging a fan cowl edge in the air exit region,
in particular where the arrangement angle is between 10° and 40°.

15. The gear unit (6) according to at least one of the preceding claims,
**characterised in that**
the external radius of the fan impeller is greater than the width of the gear unit (6) and smaller than the height of the gear unit (6).

16. The gear unit (6) according to one of Claims 1 to 12,
**characterised in that**
the external radius of the fan impeller is smaller than the width of the gear unit (6) and smaller than the height of the gear unit (6), wherein the radius of the opening of the separating plate is, in particular substantially, equal to the external radius of the air-entry region of the fan impeller, which is formed by the channels of the fan impeller.

17. The gear unit (6) according to at least one of the preceding claims,
**characterised in that**
the air deflectors (4, 40) extend radially from the gear unit housing to the fan cowl (9).

18. The gear unit (6) according to at least one of the preceding claims,
**characterised in that**
the fan impeller has a first and a second cover disc (10, 13), which are axially spaced from one another and fan blades (7) are arranged between the cover discs (10, 13) so that channels are formed,
wherein the channel cross-section (Q2) increases monotonously from the radially further inward lying entry region on the fan impeller to the radially further outward lying exit region on the fan impeller,
in particular wherein the entry region is realised in one axial position, i.e. in particular the entry-region surface is a surface extending only radially and in the circumferential direction and the exit-region surface is a surface extending in the radial direction, in the circumferential direction and in the axial direction.

## Revendications

1. Boîte de vitesses (6) comprenant un arbre, en particulier un arbre d'entrée,
dans laquelle une roue de ventilateur est liée en rotation à l'arbre,
dans laquelle un capot de ventilateur (9), qui entoure au moins partiellement la roue de ventilateur, est relié au carter de boîte de vitesses,
dans laquelle une plaque de séparation (1) destinée à séparer la chambre de pression du ventilateur de la chambre d'aspiration du ventilateur est reliée au capot de ventilateur (9),
dans laquelle la plaque de séparation (1) présente une ouverture d'entrée d'air pour la roue de ventilateur et est disposée du côté de la roue de ventilateur axialement éloigné de la boîte de vitesses (6),
dans laquelle la roue de ventilateur présente un premier et un deuxième disque de recouvrement (10, 13) qui sont espacés axialement l'un de l'autre et des ailettes de ventilateur (7) sont disposées entre les disques de recouvrement (10, 13) de manière à former des canaux,
dans laquelle la distance radiale de l'ouverture d'entrée d'air est disposée à l'intérieur, en particulier centralement à l'intérieur de la plage de distance radiale couverte par le premier disque de recouvrement (10) et
dans laquelle l'ouverture d'entrée d'air est disposée axialement à l'intérieur, en particulier centralement à l'intérieur de la plage axiale couverte par le premier disque de recouvrement (10),
dans laquelle la plaque de séparation (1) est adjacente à la roue de ventilateur, un espacement qui empêche un contact entre la plaque de séparation (1) et la roue de ventilateur étant prévu,
**caractérisée en ce**
**qu'**au moins un des disques de recouvrement (10, 13) est de forme conique et la roue de ventilateur est une roue de ventilateur radial à effet diffuseur.

2. Boîte de vitesses (6) selon la revendication 1,
**caractérisée en ce**
**que** les ailettes de ventilateur (7) de la roue de ventilateur sont espacées de façon irrégulière dans la direction circonférentielle.

3. Boîte de vitesses (6) selon au moins l'une des revendications précédentes,
**caractérisée en ce**
**que** la plaque de séparation (1) est adjacente à la roue de ventilateur, un espacement, c'est-à-dire une fente, étant prévu, la largeur de la fente, en particulier la plage de distance radiale couverte par la fente, étant inférieure à 10 %, en particulier inférieure à 5 %, en particulier inférieure à 5 %, en particulier inférieure à 5 % et supérieure à 0,1 %, du diamètre extérieur de la roue de ventilateur.

4. Boîte de vitesses (6) selon au moins l'une des revendications précédentes,
**caractérisée en ce**
**que** le capot de ventilateur (9) et/ou le carter de boîte de vitesses sont rectangulaires.

5. Boîte de vitesses (6) selon au moins l'une des revendications précédentes,
**caractérisée en ce**
**que** le diamètre extérieur de la roue de ventilateur est supérieur à la largeur du carter de boîte de vitesses et/ou inférieur à la hauteur du carter de boîte de vitesses.

6. Boîte de vitesses (6) selon au moins l'une des revendications précédentes,
**caractérisée en ce**
**que** des déflecteurs d'air (4, 40) sont disposés entre le capot de ventilateur (9) et le carter de boîte de vitesses pour empêcher ou réduire le tourbillonnement du flux d'air sortant du capot de ventilateur (9),
dans laquelle les déflecteurs d'air (4, 40) sont espacés axialement de la roue de ventilateur.

7. Boîte de vitesses (6) selon au moins l'une des revendications précédentes,
**caractérisée en ce**
**que** le capot de ventilateur (9) est réalisé sous la forme d'une buse (3) dans la zone de sortie d'air, de sorte qu'un courant d'air sortant s'écoule le long du carter de boîte de vitesses.

8. Boîte de vitesses (6) selon au moins l'une des revendications précédentes,
**caractérisée en ce**
**qu'**une plaque de recouvrement (12) est espacée axialement de la plaque de séparation (1), de sorte que l'entrée d'air a lieu depuis la direction radiale.

9. Boîte de vitesses (6) selon la revendication 9,
**caractérisée en ce**
**que** la plaque de recouvrement (12) présente des évidements pour permettre un flux d'air entrant axial supplémentaire.

10. Boîte de vitesses (6) selon la revendication 9 ou 10,
**caractérisée en ce**
**qu'**une partie de boîtier de protection contre l'accès est disposée entre la plaque de recouvrement (12) et la plaque de séparation (1), au moyen de laquelle la plaque de recouvrement (12) est maintenue sur la plaque de séparation (1).

11. Boîte de vitesses (6) selon au moins l'une des revendications précédentes,
**caractérisée en ce**
**que** la plaque de séparation (1) est reliée de manière amovible au capot de ventilateur (9), en particulier de sorte qu'il soit possible de prévoir des roues de ventilateur de tailles différentes dans le capot de ventilateur (9) en remplaçant la plaque de séparation.

12. Boîte de vitesses (6) selon au moins l'une des revendications précédentes,
**caractérisée en ce**
**qu'**une plaque de recouvrement (12) est espacée axialement de la plaque de séparation (1).

13. Boîte de vitesses (6) selon au moins l'une des revendications précédentes,
**caractérisée en ce**
**que** le capot de ventilateur (9), en particulier avec la plaque de séparation (1), est conçu comme une pièce découpée et pliée.

14. Boîte de vitesses (6) selon la revendication 7,
**caractérisée en ce**
**que** la buse (3) est réalisée par incidence d'un bord de capot de ventilateur dans la zone de sortie d'air,
l'angle d'incidence se situant en particulier entre 10° et 40°.

15. Boîte de vitesses (6) selon au moins l'une des revendications précédentes,
**caractérisée en ce**
**que** le rayon extérieur de la roue de ventilateur est supérieur à la largeur de la boîte de vitesses (6) et inférieur à la hauteur de la boîte de vitesses (6).

16. Boîte de vitesses (6) selon l'une des revendications 1 à 12,
**caractérisée en ce**
**que** le rayon extérieur de la roue de ventilateur est inférieur à la largeur de la boîte de vitesses (6) et inférieur à la hauteur de la boîte de vitesses (6), le rayon de l'ouverture de la plaque de séparation étant égal, en particulier sensiblement égal, au rayon extérieur de la zone d'entrée d'air de la roue de ventilateur formée par les canaux de la roue de ventilateur.

17. Boîte de vitesses (6) selon au moins l'une des revendications précédentes,
**caractérisée en ce**
**que** les déflecteurs d'air (4, 40) s'étendent radialement du carter de boîte de vitesses au capot de ventilateur (9).

18. Boîte de vitesses (6) selon au moins l'une des revendications précédentes,
**caractérisée en ce**
**que** la roue de ventilateur présente un premier et un deuxième disque de recouvrement (10, 13) qui sont espacés axialement l'un de l'autre et des ailettes de ventilateur (7) sont disposées entre les disques de recouvrement (10, 13) de manière à former des canaux, dans laquelle la section transversale de canal (Q2) augmente de façon monotone de la zone d'entrée située radialement plus à l'intérieur sur la roue de ventilateur vers la zone de sortie située radialement plus à l'extérieur sur la roue de ventilateur,
en particulier dans laquelle la zone d'entrée est à une position axiale, en particulier la surface de zone d'entrée est une surface s'étendant seulement radialement et dans la direction circonférentielle et la surface de zone de sortie est une surface s'étendant dans la direction radiale, dans la direction circonférentielle et dans la direction axiale.
